# EUROPEAN PATENT SPECIFICATION

(11) **EP 3 136 836 B1**
(45) Date of publication and mention of the grant of the patent: **30.12.2020**
(21) Application number: 15786447.1
(22) Date of filing: 17.04.2015
(51) Int. Cl.: A01G 18/70, A01D 45/00, A01D 75/00

(54) **GRAZE HARVESTING OF MUSHROOMS**
ABSCHRAMMERNTE VON PILZEN
RÉCOLTE SÉLECTIVE DES CHAMPIGNONS

(30) Priority: 28.04.2014 US 201461985266 P
(43) Date of publication of application: 08.03.2017
(73) Proprietor: Vineland Research and Innovation Centre, Vineland Station ON L0R 2E0 (CA)
(72) Inventor: VAN DE VEGTE, John, Cambridge, Ontario N1T 1Y8 (CA); LAWSON, Michael, Burlington, Ontario L7R 1V9 (CA); RENFREW, John, Dundas, Ontario L9H 1L8 (CA); MATHEW, Koshy, Ajax, Ontario L1T 0M8 (CA)
(74) Representative: Weidner Stern Jeschke
(86) International application number: PCT/CA2015/050321
(87) International publication number: WO 2015/164958

(56) References cited:
- US-A- 5 058 368
- US-A- 5 058 368
- US-A- 5 471 827
- US-A- 5 471 827
- Alireza Masoudian ET AL: "Computer Vision Algorithms For An Automated Harvester", , 1 January 2013 (2013-01-01), XP055436884, Retrieved from the Internet: URL:https://pdfs.semanticscholar.org/c04c/ 406de18ff533a47bf69882e77928ee32f1b4.pdf [retrieved on 2017-12-20]
- R.D. TILLETT ET AL: "An algorithm for locating mushrooms in a growing bed", COMPUTERS AND ELECTRONICS IN AGRICULTURE, vol. 6, no. 3, 1 December 1991 (1991-12-01), pages 191-200, XP055436886, AMSTERDAM, NL ISSN: 0168-1699, DOI: 10.1016/0168-1699(91)90001-P

## Description

### Field

This application relates to a method and system for harvesting mushrooms from a mushroom bed.

### Background

Graze harvesting of mushrooms involves strategic harvesting of mushrooms from a bed of mushrooms in order to maximize crop yield. The process is significantly more complex than just harvesting the large size mushrooms. It also includes the identification and harvesting of smaller sized mushrooms in order to provide room for adjacent, larger mushrooms to grow to maximum size. This aspect is termed "separation" in the mushroom growing industry. The harvest strategy must also take into account the generational differences for the mushrooms in the bed such that there are consistently mushrooms available to harvest throughout the harvest process. This process is called "stagger". Control of both separation and stagger is important for efficiently harvesting a harvesting bed on an ongoing basis.

Currently, graze harvesting of mushrooms is being conducted manually at mushroom farms. Differences in operator training and experience results in variation in the harvest results and reduces crop yield. Further, manual harvesting is typically conducted during a single 10 hour shift per day which implies that the mushrooms are allowed to grow in a more-or-less uncontrolled state over each night.

There are a few methods in the art that use cameras for locating and measuring cap diameters of mushrooms in a mushroom bed before harvesting the mushrooms with a mechanical picker. However, such methods do not provide for automatically selecting and picking mushrooms based on both separation and stagger. Camera-based apparatuses for locating and measuring mushrooms in a mushroom bed are described in, for example, NL 86/00887, US 5,058,368, US 5,471,827 US 8,033,087 and US 2005-0268587. Furthermore, algorithms for the selecting harvest ready mushrooms are known from A. Masoudian and K. Mclsaac: "Computer Vision Algorithms For An Automated Harvester" and R. Tillet and B. Batchelor: "An algorithm for locating mushrooms in a growing bed".

There remains a need for automated methods and systems for harvesting mushrooms from a mushroom bed where both separation and stagger are automatically controlled.

### Summary

This need is met with a method of graze harvesting mushrooms according to claim 1 and a system for harvesting mushrooms according to claim 11.

The method and system provide for controlling harvesting of mushrooms during a mushroom graze harvest operation is provided. The method and system provide for the automatic and proper selection of which mushrooms in a bed are to be harvested in a given shift. Both separation and stagger are automatically controlled. Separation is the identification of which mushrooms to pick to provide room for adjacent mushrooms to grow larger. Stagger is accounting for generational differences to ensure that there are always mushrooms to harvest.

Further features will be described or will become apparent in the course of the following detailed description. It should be understood that each feature described herein may be utilized in any combination with any one or more of the other described features, and that each feature does not necessarily rely on the presence of another feature except where evident to one of skill in the art.

### Brief Description of the Drawings

For clearer understanding, preferred embodiments will now be described in detail by way of example, with reference to the accompanying drawings, in which:
Fig. 1 depicts a mushroom harvesting work cell comprising a system of the present invention.
Fig. 2 is a flow chart depicting steps in a mushroom farm production system utilizing the method and system of the present invention.

### Detailed Description

The system comprises one or more cameras, one or more mushroom harvesters and a control apparatus.

One or more cameras may be provided for supplying image data to the control apparatus for locating mushrooms in the bed and measuring cap diameters of the mushrooms. Location data derived from the image data may be used to determine the centroid positions of mushrooms. Centroid positions and cap diameters may be used to calculate centroid-to-centroid distances from each mushroom to each neighboring mushroom and compare the centroid-to-centroid distances for neighboring mushrooms to the sum of the radii for the neighboring mushrooms. Any suitable type of camera may be used. The cameras preferably have sufficient resolution to resolve individual mushrooms, or at least to resolve tightly grouped sets of mushrooms from other tightly group sets mushrooms. Digital cameras are of particular use as they are more easily interfaced with the control apparatus. The cameras may be operatively linked to, for example in electronic communication with, the control apparatus to facilitate data transfer from the cameras to the control apparatus and to permit the control apparatus to automatically control the motion and settings of the cameras. The cameras may be configured to take still images, video images or both.

One or more mushroom harvesters may be configured to pick mushrooms from the bed. The harvesters may be human or may be mechanical for example suitably robotic mushroom pickers, many of which are known in the art. A particularly suitable example of a robotic picker comprises a picker that employs a gripper, for example a pincer, an adhesive or a suction cup, at the end of a robotic arm. The harvesters may be operatively linked to, for example in electronic communication with, the control apparatus to aid the harvesters in picking mushrooms and/or to facilitate automatic control of the harvesters by the control apparatus. For aiding or controlling the operation of the harvesters, the control apparatus comprises software. Where the harvesters comprise robotic pickers, the software controls movements of the harvesters, for example spatial translation of a robotic arm to position a suction cup over a mushroom cap, rotation of the suction cup to loosen the mushroom from the bed and translation of the arm to remove the mushroom from the bed and transport the mushroom to a storage area. The use of mechanical harvesters, for example robotic pickers, permits automatic harvesting of mushrooms without human intervention except to set the control parameters and initiate instructions for the system to begin picking.

Control software for performing the method may be embodied in the control apparatus operatively linked to, for example in electronic communication with, the one or more cameras and/or to the one or more mushroom harvesting apparatuses. Electronic communication may be provided through wires or wirelessly. The control apparatus may comprise, for example, a computer, an output device and an input device, the computer comprising a microprocessor for controlling operations and a non-transient electronic storage medium for storing information about the mushrooms and bed and/or for storing computer executable code for carrying out instructions for implementing the method. The computer may further comprise a transient memory (e.g. random access memory (RAM)) accessible to the microprocessor while executing the code. A plurality of computer-based apparatuses may be connected to one another over a computer network system and geographically distributed. One or more of the computer-based apparatuses in the computer network system may comprise a microprocessor for controlling operations and a non-transient electronic storage medium for storing information about the mushrooms and bed and/or for storing computer executable code for carrying out instructions for implementing the method, and the computer-based apparatuses in the network may interact so that the harvesting operation may be carried out automatically from remote locations. The output device may be a monitor, a printer, a device that interfaces with a remote output device or the like. The input device may be a keyboard, a mouse, a microphone, a device that interfaces with a remote input device or the like. With a computer, data (e.g. images from cameras) may be a graphically displayed in the output device. There is also provided a computer readable non-transient storage medium having computer readable code stored thereon for executing computer executable instructions for carrying out the method.

While the control software may automatically perform the method, the input device of the control apparatus allows an operator to have control of various parameters for optimizing the process. In one embodiment, one or more of the following parameters may be controlled by the operator or an automated expert subsystem: overlap, crowding, minimum separation, maximum separation and graze picking threshold. Overlap is the maximum amount of overlap allowed between adjacent mushrooms. Crowding is the maximum number of mushroom allowed around a specific mushroom. Minimum separation is the minimum mushroom cap diameter allowed to be harvested during the separation/stagger process. Maximum separation is the maximum mushroom cap diameter allowed to be harvested during the separation/stagger process. Graze picking threshold is the minimum mushroom cap diameter to be harvested during a particular graze harvest cycle.

Criteria for the minimum mushroom diameter range to pick during the separation process (the minimum pre-set value) can vary from mushroom farm to mushroom farm, but is preferably in a range of 20 mm to 30 mm. The criteria may be incorporated into the harvest cell control software. The pre-set value and/or the following control variables may be set and/or changed by an automated expert subsystem or by an operator from the operator interface, e.g. a touchscreen.

Overlap and Crowding Variables: These control variables are based on the concept of interference between adjacent mushrooms causing a relative force vector between the mushrooms. Overlap is a measure of the sum of all force vectors impacting each mushroom caused by interference with adjacent mushrooms. Crowding is a measure of sum of force vectors divided by mushroom diameters. An example of this variable is a large mushroom surrounded by relatively small mushrooms. Separation in this area is less critical since the large mushroom will be taller than the adjacent small mushrooms.

Minimum Separation Variable: Provides the ability to adjust the minimum mushroom diameter to be included in the separation process to a diameter less than 20 mm.

Maximum Separation Variable: Provides the ability to adjust the maximum mushroom diameter to be included in the separation process to a diameter greater than 30 mm.

Graze Picking Threshold: Provide the ability to adjust the graze harvest criteria from those noted above.

Mushroom tracking versus time: The harvest system control software maintains data in memory for every bin that is photographed and harvested. The control software may also track location and diameter for every mushroom in the crop individually. This data would be used to further improve control of the harvest process. There are instances where mushroom cap diameters stop growing and all further growth is in stem length. With this software functionality in place, the system will be able to identify these situations and these mushrooms can be harvested.

In one embodiment, when a bed of mushrooms is introduced to an automated harvesting system of the present invention, a camera takes a digital photograph of the bed and the data is processed through software to locate each mushroom and measure its cap diameter. Thereafter, the data for each mushroom is compared to programmed criteria for graze harvest and separation/stagger.

For the graze harvest function, each mushroom cap diameter is compared to a profile for minimum mushroom cap diameter to be graze harvested for each day of crop. Any mushrooms with cap diameters equal to or greater than the minimum mushroom cap diameter for that day will be automatically harvested. The minimum pre-set value of cap diameter for harvesting a mushroom in a particular graze is preferably greater than or equal to the pre-determined value for calculating the centroid position of the mushroom. The pre-set value is preferably set to no lower than the lowest mushroom size that is marketable, and may vary from mushroom farm to mushroom farm. For example, a minimum pre-set value may be 20 mm.

For the separation/stagger function, the software calculates the centroid position for every mushroom in the bed with a cap diameter greater than the pre-determined value, for example greater than about 10 mm. The pre-determined value may be the same or different than the pre-set value described above. Subsequently the software automatically processes the following steps for every mushroom in the bed:
1. Calculates the centroid-to-centroid distance between each mushroom and each of its neighbors.
2. Compares the centroid-to-centroid distances with the sum of the radii for the mushrooms in question. If the centroid-to-centroid distance for any two mushrooms is less than or equal to the sum of the radii, interference exists between the two mushrooms. The software evaluates every mushroom interaction on the bed concurrently.
3. The software counts the number of mushrooms interacting with each mushroom to identify area of mushroom clumps that require thinning.

Employing the parameters noted above, the software automatically determines which mushrooms must be removed from the mushroom bed in order to ensure space for other mushrooms to grow to optimal size.

The software provides the operator or automated expert subsystem control of key function parameters. As such the software can be tuned to the specific needs of the mushroom farm, for example overall output, selection of mushroom grade (triggered for example by changes in revenue associated with mushroom grades), and the like.

In some embodiments, a typical crop of mushrooms may be harvested over a period of about 12 days comprising two 5-day "flushes" of mushrooms separated by a 2-day "interflush" period where no mushrooms are harvested. In one embodiment, a typical graze harvest profile may comprise:
Flush 1 Day 1: Graze harvest all mushrooms 55 mm diameter or greater
Flush 1 Day 2: Graze harvest all mushrooms 50 mm diameter or greater
Flush 1 Day 3: Graze harvest all mushrooms 45 mm diameter or greater
Flush 1 Day 4: Graze harvest all mushrooms 40 mm diameter or greater
Flush 1 Day 5: Harvest all mushrooms 20 mm diameter or greater from the bed Interflush Days 6-7
Flush 2 Day 8: Graze harvest all mushrooms 55 mm diameter or greater
Flush 2 Day 9: Graze harvest all mushrooms 50 mm diameter or greater
Flush 2 Day 10: Graze harvest all mushrooms 45 mm diameter or greater
Flush 2 Day 11: Graze harvest all mushrooms 40 mm diameter or greater
Flush 2 Day 12: Harvest all mushrooms 20 mm diameter or greater from the bed

Further, each mushroom's cap diameter may be tracked over time and compared to expected growth rates. If mushroom cap growth rate at subsequent harvest cycles do not achieve expected rates, the mushroom could be harvested. Expected growth rates may be determined from historical mushroom cap diameter data stored in the control apparatus. Thus, if mushroom cap diameter does not grow an expected amount in a given time period, it can be expected that stem is growing instead of the mushroom cap. At this point the mushroom should be harvested.

Methods for calculating the centroid position of a mushroom from photographic data are known in the art. A typical, industry-standard methodology to find the centroid location of a round object would be as follows. Locate general areas of contrasting pixel color (i.e. white pixels of mushroom cap on black casing background). In vision system development art this is called "blob-find". Locate the line within each "blob" where the white pixels transition to black to identify the "blob" outline. Identify the centroid of the outlined shape.

While prior art methods of finding centroid positions may be suitable in some cases, problems may arise in areas of the bed where mushrooms overlap. Mushrooms grow in random positions in the mushroom bed and are often directly adjacent to and overlapping with other mushrooms. In these areas, it can be very difficult or impossible for a prior art vision system to automatically locate the separate outline between the two mushrooms. Typically, a vision system will therefore identify multiple mushrooms as a single, odd-shaped "blob" with an incorrect centroid location. An incorrect centroid location sent to the harvesting apparatus may lead to a failed harvest attempt.

In order to address this problem, the present invention may incorporate the following method to locate the mushroom centroid location. Locate "blob" of contrasting pixel colors. Locate "blob" outline and centroid. Create a vector line from the centroid position to the "blob" edge at an angle of 0 degrees. Repeat many times at incremented angles to locate many individual points on the edge of the "blob". Evaluate the different vector line lengths and delete any lines which are too long or too short. Vector lines which are too long or too short indicate that they are the result of interference with adjacent mushrooms. Fit a curve to the remaining vector lines to identify the "real" edge of the mushroom cap. Recalculate mushroom cap diameter and centroid location. This is a much more accurate method to locate the correct location for a mushroom to be picked by the harvesting apparatus.

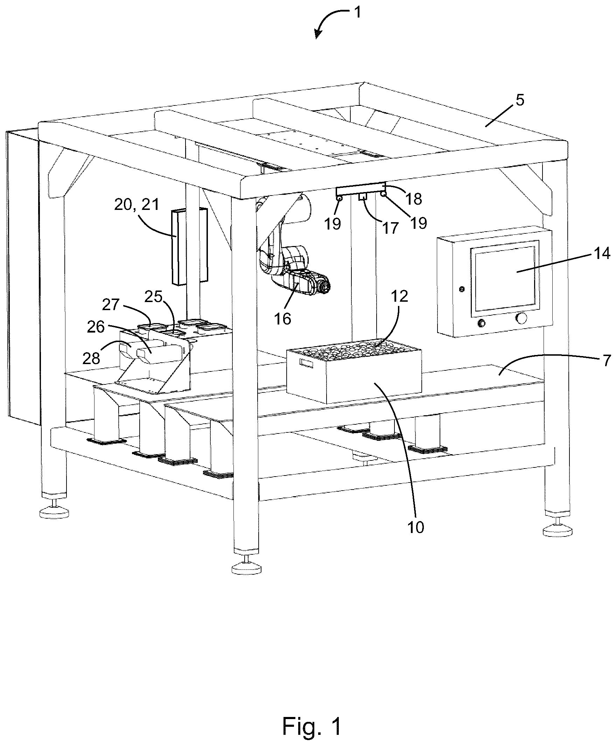

With reference to Fig. 1, a mushroom harvesting work cell **1** comprising an embodiment of a system of the present invention is depicted. The cell **1** comprises a frame **5** on which components of the system are mounted. The system comprises: a mushroom tray **10** in which mushrooms **12** are growing in a growth mixture; a user interface **14**, in this case a touch screen, in electronic communication with a computer **20**, in this case mounted in an electrical panel **21** of the system on the frame **5**; a robotic arm **16** in electronic communication with the computer **20** and configured to pick mushrooms **12** from the mushroom tray **10**; a camera assembly **18** including a digital camera **17** and lights **19** to provide stable illumination of the tray **10**, in electronic communication with the computer **20** and configured to take images of the mushroom tray **10**; and first and second trim stations **25, 27** configured to receive picked mushrooms from the robotic arm **16** and then trim the stems of the picked mushrooms.

In operation, the harvesting cycle first begins with the mushroom tray **10** being loaded onto a table **7** supported at a front of the frame **5** where a digital image of the mushroom tray **10** is captured by the digital camera **18.** With pre-determined picking settings, the computer **20** will find all mushrooms **12** in the mushroom tray **10** and will determine which mushrooms **12** will be picked based on the method described above. While the computer **20** is finding and calculating which mushrooms **12** should be picked, the tray **10** is moved to a picking position under the robotic arm **16**, and when the calculations are complete the robotic arm **16** commence picking of the selected mushrooms. The robotic arm **16** transfers a mushroom to the first trim station **25** where the stem of the mushroom is trimmed right above the root structure of the mushroom. The mushroom root structure is collected into a bin through first chute **26** for disposal. The mushroom without the root structure is then transferred by the robotic arm **16** to the second trim station **27** where the mushroom stem is cut at a specified length relative to the diameter of the mushroom cap. The stem section is collected into a separate bin through second chute **28**, and can be sold by the mushroom grower to food processors who will use the stems as an ingredient in, for example, soups and sauces. The trimmed mushroom may then be transferred by the robotic arm **16** or some other mechanism to a mushroom packaging system (not shown).

It should be noted that the method and system of graze harvesting and software associated therewith does not necessarily need to be tied to a robotic picking apparatus. The camera, lighting, software and other components of the system may be employed to locate and target mushrooms to be harvested as above. The actual mushroom harvesting may be conducted manually where the harvester is guided by the software. For example, the mushrooms targeted by the system could be displayed to the harvester on a monitor screen or goggles.

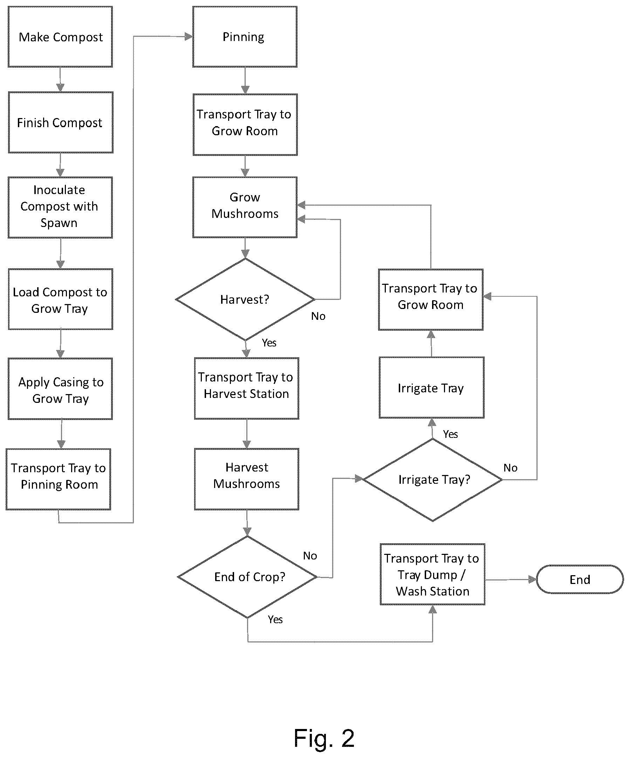

The present invention permits automation, in whole or in part, of a mushroom farm production system. One such production system is illustrated in Fig. 2. The general production system described in more detail below is a departure from the current state of the mushroom farming industry. Industry current practice comprises growing mushrooms in large, multi-layer shelves. Mushrooms are harvested manually by laborers travelling along the length of the fixed trays. The limited space between the layers of mushroom trays precludes the introduction of many types of automation to the process. The growing of mushrooms in smaller transportable trays allows for the introduction of automation to the mushroom farm process. The mushroom trays can be transported automatically by conveyor between different automated stations. Each mushroom tray may incorporate a tracking device, e.g. an RFID tag, which provides serial identification. Readers at operation stations and strategic locations within the tray transport conveyor system ensure correct tray trafficking and operations.

A process control system comprises hardware and software used to control all or almost all aspects of the production process. Process control may be centralized in a single computer programmed with expert subsystems to make decisions based on data collected from tracking devices, cameras and other sensors, and then provide instructions to other hardware components of the system to perform various functions.

Referring to Fig. 2, a mushroom farm production process involving automated systems may comprise a number of steps.

### Make Compost:

Compost may be produced in batches employing traditional methods. Different mushroom farms tend to have their own proprietary compost recipe and process. Robotic equipment (e.g. collectors, mixers, transporters, etc.) may be used during compost production, if desired, and operation of such equipment may be controlled by the control system in response to data collected over the whole production system.

### Finish Compost:

Compost may be finished employing traditional methods. After completion of the composting process, the compost may be pasteurized to kill any insects, pests or fungi that are present in the compost. In addition, the compost may be be aerated to reduce ammonia concentration to levels that are not lethal to mushroom spawn growth. Robotic equipment (e.g. automated pasteurizers, aerators, etc.) may be used, if desired, during compost finishing, and operation of such equipment may be controlled by the control system in response to data collected over the whole production system.

### Inoculate Compost with Spawn:

Mushroom spawn may be purchased by the farm from commercial suppliers who specialize in its production. The spawn comprises a grain such as rye, wheat, millet or other which has been colonized by mushroom mycelium. The spawn may be mixed uniformly into the finished compost using traditional methods. Inoculation and mixing may be accomplished, if desired, with robotic injectors and mixers controlled by the control system in response to data collected over the whole production system.

### Load Compost to Tray:

Traditionally mushrooms are grown in large, static trays. Instead, the inoculated compost may be loaded into small, transportable trays which can be moved to different locations by a conveyor system. A typical grow tray size would be 24"L x 18"W x 9"H. Other tray sizes are possible. Each tray may incorporate an RFID tag which identifies and permits tracking of each individual tray.

In a batch operation, a number of trays may be loaded from a single batch of compost. At the completion of compost loading and in all subsequent operations, the tray RFID tags may be read by an RFID reader mounted at a station. The process control system may be updated to record the tray number, date, time and successful operation completion. In this way, the process control system is able to track the status and location of each individual grow tray, and then transmit instructions to other automated equipment in the production system based on data collected from the trays. The trays may be subsequently transported automatically by conveyor to a casing station.

### Apply Casing to Tray:

Casing is a dressing applied evenly on top of the compost. Casing may be produced in batches by the mushroom farm using traditional methods. The casing may be automatically dispensed onto the tray from a hopper. Thereafter, a pneumatic press may be employed to compress the compost and casing within the tray. Upon successful operation completion, the tray RFID tag may be read and the process control system updated. The tray may be then released from the casing station.

### Transport Tray to Pinning Room:

The tray may be transported automatically by conveyor to the pinning room. The RFID tag on each tray may be read by RFID readers integrated into the conveyor system to ensure the tray is sent to the correct location.

### Conduct Pinning:

Pinning room environment may be controlled to support growth of mycelium throughout the compost. At an appropriate time, carbon dioxide concentration within the pinning room may be reduced below the threshold to initiate fruiting of mushrooms through the casing. Appropriate carbon dioxide level parameters may be encoded in the control system, and the control system may comprise carbon dioxide sensors to monitor carbon dioxide levels in the pinning room. An expert subsystem of the control system may process the signals from the carbon dioxide sensors and transmit appropriate instructions to carbon dioxide control equipment to ensure that the level of carbon dioxide in the pinning room remains within an operational range to support the growth of the mycelium. Such automated control may also be exerted over other environmental parameters in the pinning room, for example humidity and temperature using appropriate sensors and humidity and temperature control equipment.

### Transport Tray to Grow Room:

The tray may be transported automatically by conveyor to the grow room. The RFID tag on each tray may be read by RFID readers integrated into the conveyor system to ensure the tray is sent to the correct location within the grow room. Environmental conditions (e.g. humidity, temperature, illumination, and the like) within the grow room may be maintained at optimal levels to support mushroom growth. An expert subsystem of the control system may process the signals from various sensors and transmit appropriate instructions to control equipment to ensure that the environmental parameters in the grow room remains within an operational range to support the growth of the mushrooms. The tray location within the grow room may be maintained at all times within the control system program. Individual trays may be cycled through different locations within the grow room in order offset any variation in environment conditions within the room. The use of multiple sensors in different areas of the room facilitates determination of variations. Locations of trays may be changed automatically on instructions from the control system to conveyors in the grow room.

### Decision: Release Tray for Harvest:

The control system may automatically determine the correct time to release each tray to a harvest station. The decision to release a tray for harvest is based on a number of variables.
a. The first harvest cycle of a tray may be conducted during the first day after transfer of the trays into the grow room. During this initial harvest cycle, any mushrooms of harvest size may be harvested. The processed digital data identifying the size and location of each mushroom in the tray may be stored in the control system.
b. The crop cycle day may also dictate when trays may be released for harvest. The crop typically runs through an initial flush of approx. 5 days where mushrooms can be harvested. Thereafter there is approximately 2 days where no mushrooms grow followed by a second flush of new mushroom growth.
c. In general, a harvest cycle may be conducted on each tray at a pre-set duration of, for example, 2-4 hours. Duration lengths may be varied automatically by the control system throughout the harvest process based on data collected at the various parts of the production system.
d. The processed digital data may also be used to determine optimal time to send an individual tray for harvest. Each time an individual tray is sent through the harvest process, location and size data for every mushroom present may be captured. Over time, this data may be used to develop growth rate curves for mushrooms, which may be stored in the control system. The growth rate curves could then be used by an expert subsystem of the control system to predict the sizes of mushrooms in a bed at a point in the future. In this way, trays could be released for harvest based on the presence of harvestable mushrooms instead of a time duration setting in the process control system software.

### Transport Tray to Harvest:

The tray may be transported automatically by conveyor to a robotic harvest station. The RFID tag on each tray may be read by RFID readers integrated into the conveyor system to ensure the tray is sent to the correct location.

### Harvest Mushrooms:

The robotic harvest station may identify the size and location of every mushroom present in the tray, as described above. Mushrooms that fit program criteria for harvest or separation may be harvested. In addition, historical size data for individual mushrooms may also be employed by an expert subsystem of the control system to determine when to harvest. If historical cap diameter data for an individual mushroom indicates insufficient cap diameter growth in a set period of time, that mushroom may be harvested.

### Decision: End of Crop:

At the end of the first flush of mushrooms from each tray, the trays may be cycled back to the grow room for continued mushroom growth. If required, the trays may pass through an irrigation station before being cycled back to the grow room.

At the end of the second flush of mushrooms from each tray, the tray may be diverted from production to a tray dump and wash station. Washed trays may be used to re-initiate the production process.

### Irrigation Station:

The mushroom trays may require irrigation during the time period between the first and second flushes. An irrigation station may be utilized subsequent to the harvest station and trays may be irrigated as required. The tray RFID tag may be read when the tray arrives at the irrigation station. The control system may dictate which trays get irrigated and which do not, for example based on information collected from sensors that sense the humidity levels in each tray. The control system may send instructions to automatic irrigating equipment to either irrigate a tray or let the tray pass without irrigation. The extent of irrigation in a tray may also be controlled by an expert subsystem of the control system in response to the measured humidity level in the tray.

### Transport Tray to Grow Room:

The tray may be transported automatically by conveyor from the irrigation station to the grow room. The RFID tag on each tray may be read by RFID readers integrated into the conveyor system to ensure the tray is sent to the correct location within the grow room.

### Transport Tray to Tray Dump & Wash Station:

Trays that have achieved end of crop are automatically transported to a tray dump and wash station. The tray contents are dumped and the trays are washed to prepare them for the next crop cycle.

The novel features will become apparent to those of skill in the art upon examination of the description. It should be understood, however, that the scope of the invention is defined by the appended claims.

## Claims

1. A method of graze harvesting mushrooms comprising the steps of:
(a) measuring cap diameters of mushrooms growing in a mushroom bed, whereby any mushrooms having a cap diameter equal to or greater than a pre-set value are to be picked;
(b) locating centroid positions of each mushroom in the bed having a cap diameter greater than a pre-determined value, and for each mushroom for which the centroid position was located the method being **characterized in that** step (b) comprises
(i) calculating centroid-to-centroid distances from each mushroom to each neighboring mushroom,
(ii) comparing the centroid-to-centroid distances for two mushrooms to sum of radii for the two mushrooms, whereby if the centroid-to-centroid distance is less than or equal to the sum of the radii then there is interference between the two mushrooms, and
(iii) counting the number of interfering mushrooms to identify clumps of mushrooms to be thinned; the method being further **characterized in**
(c) identifying the mushrooms to be picked based on steps (a) to (b) and picking the identified mushrooms,
wherein measuring cap diameters, locating centroid positions, calculating centroid-to-centroid distances, comparing the centroid-to-centroid distances, counting the number of interfering mushrooms and identifying the mushrooms to be picked are performed automatically by a control apparatus.

2. The method according to claim 1, wherein the control apparatus receives image data from one or more cameras, the image data comprising an image of the mushrooms growing in the bed, wherein the control apparatus uses the image data to measure cap diameters, locate centroid positions, calculate centroid-to-centroid distances, compare the centroid-to-centroid distances, count the number of interfering mushrooms and identify the mushrooms to be picked.

3. The method according to claims 1 or 2, wherein locating the centroid position of an individual mushroom comprises locating a blob of contrasting pixel colors on a digital photograph of the bed, locating an outline and centroid of the blob, creating a vector line from the centroid of the blob to an edge of the blob at an angle of 0 degrees, repeating a plurality of times at incremented angles to locate a plurality of individual points on the edge of the blob, evaluating different vector line lengths and deleting any lines whose lengths indicate interference with adjacent mushrooms, and fitting a curve to the remaining vector lines to identify an edge of a cap of the individual mushroom.

4. The method according to any one of claims 1 to 3, wherein the pre-determined value is 10 mm, or the pre-set value is 20 mm, or the pre-determined value is 10 mm and the pre-set value is 20 mm.

5. The method according to any one of claims 1 to 4, wherein the pre-set value is set automatically by an expert system or an operator.

6. The method according to any one of claims 1 to 5, wherein the mushrooms are harvested over a period of time in a series of flushes where each flush in the series has a different pre-set value and the pre-set value is smaller in each subsequent flush.

7. The method according to claim 6, comprising a plurality of series of flushes separated by interflush periods.

8. The method according to any one of claims 1 to 7, wherein one or more of overlap, crowding, minimum separation, maximum separation and graze picking threshold is adjustable by an operator or an automated expert subsystem.

9. The method according to any one of claims 1 to 8, wherein the mushroom cap diameters are tracked over time and compared to expected growth rates based on historical mushroom cap diameter data, and mushrooms whose cap diameters do not grow at the expected growth rate are harvested and/or mushrooms that are expected to hinder growth of neighbouring mushrooms are harvested.

10. The method according to any one of claims 1 to 9, wherein identifying the mushrooms to be picked is performed by an expert system and picking the identified mushrooms is done manually by a human harvester guided by the expert system.

11. A system for harvesting mushrooms from a bed, the system comprising:
(a) one or more mushroom harvesters configured to pick mushrooms from the bed;
(b) one or more cameras for locating mushrooms in the bed and measuring cap diameters of the mushrooms; and,
(c) a control apparatus operatively linked to the one or more cameras and operatively associated with the one or more mushroom harvesters,
wherein the control apparatus is configured to receive image data from the one or more cameras and from the image data to
determine cap diameters of the mushrooms,
locate centroid positions of mushrooms having a cap diameter greater than a pre-determined value,
the control apparatus being **characterised in that** it is further configured to for mushrooms for which the centroid position was located calculate centroid-to-centroid distances to each neighboring mushroom, compare the centroid-to-centroid distances for sets of two mushrooms to sum of radii for the two mushrooms, count the number of interfering mushrooms to identify clumps of mushrooms to be thinned and determine which mushrooms to pick from the identified clumps of mushrooms,
and wherein the control apparatus is configured to aid or operate the one or more mushroom harvesters to pick mushrooms having cap diameters equal to or greater than a pre-set value and pick the mushrooms determined to be picked from the identified clumps of mushrooms.

12. The system according to claim 11, wherein the one or more mushroom harvesters comprises one or more mechanical mushroom pickers operated automatically by the control apparatus using control software.

13. The system according to claim 12, wherein the one or more mechanical mushroom pickers comprises one or more robotic mushroom pickers comprising grippers, preferably suction cups.

14. The system according to any one of claims 11 to 13, wherein the control apparatus is in electronic communication with the one or more mushroom harvesting apparatuses and throne or more cameras.

15. A computer readable non-transient storage medium having computer readable code stored thereon for executing computer executable instructions for carrying out the method as defined in any one of claims 1 to 10.

## Patentansprüche

1. Verfahren zur selektiven Ernte von Pilzen, umfassend die folgenden Schritte
(a) Messen der Hutdurchmesser von Pilzen, die in einem Pilzbeet wachsen, wobei alle Pilze, die einen Hutdurchmesser aufweisen, der gleich oder größer als ein vorgegebener Wert ist, zu ernten sind;
(b) Lokalisieren der Schwerpunktpositionen jedes Pilzes in dem Beet, der einen Hutdurchmesser aufweist, der größer als ein vorbestimmter Wert ist, und für jeden Pilz, für den die Schwerpunktposition lokalisiert wurde, das Verfahren **dadurch gekennzeichnet ist, dass** Schritt (b) folgende Schritte umfasst:
(i) die Berechnung von Schwerpunkt-zu-Schwerpunkt-Abständen von jedem Pilz zu jedem Nachbarpilz,
(ii) der Vergleich des Schwerpunkt-zu-Schwerpunkt-Abstandes zweier Pilze mit der Summe der Radien der beiden Pilze, wobei, wenn der Schwerpunkt-zu-Schwerpunkt-Abstand kleiner oder gleich der Summe der Radien ist, eine Überlagerung der beiden Pilze vorliegt, und
(iii) das Zählen der Anzahl von überlagernden Pilzen, um Klumpen von zu verdünnenden Pilzen zu identifizieren; wobei das Verfahren ferner durch folgendes gekennzeichnet ist
(c) Identifizierung der zu pflückenden Pilze auf der Grundlage der Schritte (a) bis (b) und Pflücken der identifizierten Pilze,
wobei das Messen des Hutdurchmessers, das Lokalisieren der Schwerpunktpositionen, das Berechnen der Schwerpunkt-zu-Schwerpunkt-Abstände, das Vergleichen der Schwerpunkt-zu-Schwerpunkt-Abstände, das Zählen der Anzahl von sich überlagernden Pilzen und das Identifizieren der zu pflückenden Pilze automatisch durch ein Steuergerät durchgeführt werden.

2. Verfahren nach Anspruch 1, wobei das Steuergerät Bilddaten von einer oder mehreren Kameras empfängt, wobei die Bilddaten ein Bild der in dem Beet wachsenden Pilze umfassen, wobei das Steuergerät die Bilddaten verwendet, um Hutdurchmesser zu messen, Schwerpunktpositionen zu lokalisieren, Schwerpunkt-zu-Schwerpunkt-Abstände zu berechnen, die Schwerpunkt-zu-Schwerpunkt-Abstände zu vergleichen, die Anzahl der sich überlagernden Pilze zu zählen und die zu pflückenden Pilze zu identifizieren.

3. Verfahren nach Anspruch 1 oder 2, wobei das Lokalisieren der Schwerpunktposition eines einzelnen Pilzes Folgendes umfasst: das Lokalisieren eines Kleckses kontrastierender Pixelfarben auf einer digitalen Fotografie des Bettes, das Lokalisieren einer Kontur und eines Schwerpunktes des Klecks, das Erzeugen einer Vektorlinie vom Schwerpunkt des Klecks zu einer Kante des Klecks in einem Winkel von 0 Grad, die mehrfache Wiederholung in inkrementierten Winkeln, um eine Vielzahl einzelner Punkte am Rand des Kleckses zu lokalisieren, die Auswertung verschiedener Vektorlinienlängen und das Löschen aller Linien, deren Längen eine Überlagerung mit benachbarten Pilzen anzeigen, und die Anpassung einer Kurve an die verbleibenden Vektorlinien, um einen Rand eines Hutes des einzelnen Pilzes zu identifizieren.

4. Verfahren nach einem der Ansprüche 1 bis 3, wobei der vorbestimmte Wert 10 mm oder der vorgegebene Wert 20 mm oder der vorgegebene Wert 10 mm und der vorgegebene Wert 20 mm beträgt.

5. Verfahren nach einem der Ansprüche 1 bis 4, wobei der vorgegebene Wert automatisch durch ein Fachsystem oder einen Bediener eingestellt wird.

6. Verfahren nach einem der Ansprüche 1 bis 5, wobei die Pilze über einen Zeitraum in einer Reihe von Durchgängen geerntet werden, wobei jeder Durchgang in der Reihe einen anderen vorgegebenen Wert aufweist und der vorgegebene Wert bei jedem nachfolgenden Durchgang kleiner ist.

7. Verfahren nach Anspruch 6, umfassend eine Vielzahl von Reihen von Durchgängen, die durch Intervallzeiten getrennt sind.

8. Verfahren nach einem der Ansprüche 1 bis 7, wobei eine oder mehrere der Kriterien Überlappung, Überfüllung, minimaler Abstand, maximaler Abstand und selektive Pflück-Schwelle durch einen Bediener oder ein automatisiertes Fachsubsystem einstellbar ist.

9. Verfahren nach einem der Ansprüche 1 bis 8, wobei die Pilzhutdurchmesser im Zeitverlauf verfolgt und mit den erwarteten Wachstumsraten auf der Grundlage historischer Pilzhutdurchmesserdaten verglichen werden und Pilze geerntet werden, deren Hutdurchmesser nicht mit der erwarteten Wachstumsrate wachsen, und/oder Pilze geerntet werden, von denen erwartet wird, dass sie das Wachstum benachbarter Pilze behindern.

10. Verfahren nach einem der Ansprüche 1 bis 9, wobei die Identifizierung der zu pflückenden Pilze von einem Fachsystem durchgeführt wird und das Pflücken der identifizierten Pilze manuell durch einen menschlichen Pflücker unter Anleitung des Fachsystems erfolgt.

11. System zum Ernten von Pilzen von einem Beet, wobei das System Folgendes umfasst:
(a) eine oder mehrere Pilzerntemaschinen, die dazu konfiguriert sind, Pilze vom Beet zu pflücken;
(b) eine oder mehrere Kameras zur Lokalisierung von Pilzen im Beet und zur Messung von Hutdurchmessern der Pilze; und,
(c) ein Steuergerät, das operativ mit einer oder mehreren Kameras verbunden ist und operativ einer oder mehreren Pilzerntemaschinen zugeordnet ist,
wobei die Steuervorrichtung dazu konfiguriert ist, Bilddaten von der einen oder den mehreren Kameras zu empfangen und aufgrund der Bilddaten
den Hutdurchmesser der Pilze zu bestimmen,
die Schwerpunktpositionen von Pilzen zu lokalisieren, die einen Hutdurchmesser aufweisen, der größer als ein vorbestimmter Wert ist,
wobei das Steuergerät **dadurch gekennzeichnet ist, dass** es ferner konfiguriert ist, um für Pilze, deren Schwerpunktposition lokalisiert wurde, die Schwerpunkt-zu-Schwerpunktabstände zu jedem benachbarten Pilz zu berechnen, die Schwerpunkt-zu-Schwerpunktabstände für Sätze von zwei Pilzen mit der Summe der Radien für die beiden Pilze zu vergleichen, die Anzahl der sich überlagernden Pilze zu zählen, um die zu verdünnenden Pilzklumpen zu identifizieren, und zu bestimmen, welche Pilze aus den identifizierten Pilzklumpen zu pflücken sind,
und wobei das Steuergerät so konfiguriert ist, dass es den einen oder die mehreren Pilzerntemaschinen unterstützt oder betreibt, um Pilze zu pflücken, die Hutdurchmesser aufweisen, die gleich oder größer als der vorgegebene Wert sind, und um zu bestimmen, welche Pilze aus den identifizierten Pilzklumpen zu pflücken sind.

12. System nach Anspruch 11, wobei der eine oder die mehreren Pilzerntemaschinen einen oder mehrere mechanische Pilzpflücker umfassen, die von dem Steuergerät unter Verwendung von Steuersoftware automatisch betrieben werden.

13. System nach Anspruch 12, wobei der eine oder die mehreren mechanischen Pilzpflücker einen oder mehrere robotisierte Pilzpflücker umfassen, die Greifer, vorzugsweise Saugnäpfe, umfassen.

14. System nach einem der Ansprüche 11 bis 13, wobei das Steuergerät in elektronischer Verbindung mit einem oder mehreren Pilzerntegeräten und einer oder mehreren Kameras steht.

15. Computerlesbares, dauerhaftes Speichermedium, das einen darauf gespeicherten computerlesbaren Code zur Ausführung von computerausführbaren Befehlen zur Durchführung des Verfahrens nach einem der Ansprüche 1 bis 10 aufweist.

## Revendications

1. Procédé de récolte sélective de champignons comprenant les étapes consistant à :
(a) mesurer le diamètre du chapeau des champignons qui poussent dans une champignonnière, tout champignon ayant un diamètre de chapeau égal ou supérieur à une valeur prédéfinie devant être cueilli ;
(b) localiser les positions des centres géométriques de chaque champignon dans la champignonnière ayant un diamètre de chapeau supérieur à une valeur prédéterminée, et pour chaque champignon pour lequel la position du centre géométrique a été localisée, le procédé étant **caractérisé en ce que** l'étape (b) comprend
(i) le calcul des distances de centre géométrique à centre géométrique entre chaque champignon et chaque champignon voisin,
(ii) la comparaison des distances de centre géométrique à centre géométrique pour deux champignons à la somme des rayons pour les deux champignons, de sorte que si la distance de centre géométrique à centre géométrique est inférieure ou égale à la somme des rayons, il y a superposition entre les deux champignons, et
(iii) le comptage du nombre de champignons superposés pour identifier les amas de champignons à désépaissir ; le procédé étant en outre **caractérisé par**
(c) l'identification des champignons à cueillir en se fondant sur les étapes (a) à (b) et la cueillette des champignons identifiés,
où la mesure des diamètres de chapeau, la localisation des positions des centres géométriques, le calcul des distances entre centres géométriques, la comparaison des distances entre centres géométriques, le comptage du nombre de champignons superposés et l'identification des champignons à cueillir sont effectués automatiquement par un appareil de commande.

2. Procédé selon la revendication 1, où l'appareil de commande reçoit des données d'image d'une ou plusieurs caméras, les données d'image comprenant une image des champignons poussant dans la champignonnière, où l'appareil de commande utilise les données d'image pour mesurer les diamètres de chapeau, localiser les positions des centres géométriques, calculer les distances entre centres géométriques, comparer les distances entre centres géométriques, compter le nombre de champignons superposés et identifier les champignons à cueillir.

3. Procédé selon la revendication 1 ou 2, où la localisation de la position du centre géométrique d'un champignon individuel comprend la localisation d'une tache de couleurs de pixels contrastantes sur une photographie numérique de la champignonnière, la localisation d'un contour et du centre géométrique de la tache, la création d'une ligne vectorielle du centre géométrique de la tache à un bord de la tache à un angle de 0 degré, la répétition à plusieurs reprises à des angles incrémentés pour localiser plusieurs points individuels sur le bord de la tache, l'évaluation de différentes longueurs de lignes vectorielles et la suppression de toute ligne dont la longueur indique une superposition avec des champignons adjacents, et l'ajustement d'une courbe aux lignes vectorielles restantes pour identifier un bord d'un chapeau du champignon individuel.

4. Procédé selon l'une quelconque des revendications 1 à 3, où la valeur prédéterminée est de 10 mm, ou la valeur prédéfinie est de 20 mm, ou la valeur prédéterminée est de 10 mm et la valeur prédéfinie est de 20 mm.

5. Procédé selon l'une quelconque des revendications 1 à 4, où la valeur prédéfinie est fixée automatiquement par un système expert ou un opérateur.

6. Procédé selon l'une quelconque des revendications 1 à 5, où les champignons sont récoltés sur une période de temps dans une série de cueillettes où chaque cueillette de la série a une valeur prédéfinie différente et la valeur prédéfinie est plus petite à chaque cueillette suivante.

7. Procédé selon la revendication 6, comprenant une pluralité de séries de cueillettes séparées par des périodes inter-cueillette.

8. Procédé selon l'une quelconque des revendications 1 à 7, où un ou plusieurs des éléments que sont la superposition, l'encombrement, la séparation minimale, la séparation maximale et le seuil de cueillette sont réglables par un opérateur ou un sous-système expert automatisé.

9. Procédé selon l'une quelconque des revendications 1 à 8, où les diamètres des chapeaux des champignons sont suivis dans le temps et comparés aux taux de croissance attendus en se fondant sur les données historiques relatives aux diamètres des chapeaux des champignons, et où les champignons dont les diamètres des chapeaux ne croissent pas au taux de croissance attendu sont récoltés et/ou les champignons dont on prévoit qu'ils entraveront la croissance des champignons voisins sont récoltés.

10. Procédé selon l'une quelconque des revendications 1 à 9, où l'identification des champignons à cueillir est effectuée par un système expert et la cueillette des champignons identifiés est effectuée manuellement par un cueilleur humain guidé par le système expert.

11. Système de récolte des champignons d'une champignonnière, le système comprenant :
(a) une ou plusieurs cueilleuses de champignons configurées pour cueillir des champignons dans la champignonnière ;
(b) une ou plusieurs caméras permettant de localiser les champignons dans la champignonnière et de mesurer le diamètre des chapeaux des champignons ; et
(c) un appareil de commande relié de manière opérationnelle à une ou plusieurs caméras et associé de manière opérationnelle à une ou plusieurs cueilleuses de champignons,
où l'appareil de commande est configuré pour recevoir des données d'image d'une ou de plusieurs caméras et, à partir des données d'image, pour
déterminer les diamètres de chapeau des champignons,
repérer les positions des centres géométriques des champignons ayant un diamètre de chapeau supérieur à une valeur prédéterminée,
l'appareil de commande étant **caractérisé en ce qu'**il est en outre configuré pour, pour les champignons pour lesquels la position du centre géométrique a été localisée, calculer les distances de centre géométrique à centre géométrique pour chaque champignon voisin, comparer les distances de centre géométrique à centre géométrique pour des ensembles de deux champignons à la somme des rayons pour les deux champignons, compter le nombre de champignons superposés pour identifier les amas de champignons à éclaircir et déterminer les champignons à cueillir dans les amas de champignons identifiés,
et où l'appareil de commande est configuré pour aider ou faire fonctionner une ou plusieurs cueilleuses de champignons à cueillir des champignons dont le diamètre du chapeau est égal ou supérieur à une valeur prédéfinie et à cueillir les champignons déterminés comme devant être cueillis dans les amas identifiés de champignons.

12. Système selon la revendication 11, où la ou les cueilleuses de champignons comprennent une ou plusieurs cueilleuses de champignons mécaniques actionnées automatiquement par l'appareil de commande à l'aide d'un logiciel de commande.

13. Système selon la revendication 12, où le ou les cueilleuses de champignons mécaniques comprennent une ou plusieurs cueilleuses de champignons robotisés comprenant des dispositifs de préhension, de préférence des ventouses.

14. Système selon l'une quelconque des revendications 11 à 13, où l'appareil de commande est en communication électronique avec un ou plusieurs appareils de récolte de champignons et une ou plusieurs caméras.

15. Support de stockage non transitoire lisible par ordinateur sur lequel est stocké un code lisible par ordinateur pour l'exécution d'instructions exécutables par ordinateur pour la mise en œuvre du procédé selon une quelconque des revendications 1 à 10.c
